# EUROPEAN PATENT APPLICATION

(11) **EP 4 523 973 A1**
(43) Date of publication of application: **19.03.2025**
(21) Application number: 24315416.8
(22) Date of filing: 13.09.2024
(51) Int. Cl.: B60R 16/02

(54) **IMPROVED SUPPORT SYSTEM FOR A PUBLIC TRANSPORT VEHICLE**

(30) Priority: 15.09.2023 IT 202300018966
(71) Applicant: IVECO FRANCE S.A.S., 69200 Vénissieux (FR)
(72) Inventor: Gatard, Christophe, 69200 VENISSIEUX (FR)
(74) Representative: Studio Torta S.p.A.

(57) **Abstract**

Support system (5) for a vehicle (1) comprising a roof (3) and an acroter (4) delimiting at least part of the perimeter of the roof (3) and at least an operational system provided with wires and/or conduits (W), the support system (5) being configured to fix the acroter (4) to the roof (4) and to support the wires and/or conduits (W).

## Description

### CROSS-REFERENCE TO RELATED APPLICATIONS

This patent application claims priority from Italian patent application no. 102023000018966 filed on September 15, 2023, the entire disclosure of which is incorporated herein by reference.

### TECHNICAL FIELD

The present invention concerns a support system for a vehicle.

The present invention finds its preferred, although not exclusive, application in public transport vehicle such as a bus. Reference will be made to this application by way of example below.

### BACKGROUND OF THE INVENTION

Public transport vehicles such as buses have a common structure comprising a plurality of walls and a roof that delimit an inner space for transporting the passengers.

Such vehicles comprise functional elements that are usually carried over the roof and protected by a side element called "acroter" defining a sort of railing along the perimeter of the roof.

However, the fixation of the acroter and of the conduits and wires on such roof are clearly complex operation that needs to be customized for any typology of vehicle.

Accordingly, the manufacturing time and cost for producing a public transport vehicle are increased to the need of customized fixation of the aforementioned elements.

Therefore, the need is felt to reduced costs and standardize the fixation of the acroter and the conduits and wires of the operational elements of a public transport vehicle on its roof.

An aim of the present invention is to satisfy the above mentioned needs in a cost-effective and optimized manner.

### SUMMARY OF THE INVENTION

The aforementioned aim is reached by a support system and a vehicle as claimed in the appended set of claims that are integral part of the present description.

### BRIEF DESCRIPTION OF DRAWINGS

For a better understanding of the present invention, a preferred embodiment is described in the following, by way of a non-limiting example, with reference to the attached drawings wherein:
- Figure 1 is a perspective view of a public transport vehicle provided with an acroter carried by a support system according to the invention;
- Figures 2 and 3 are respectively front and rear perspective views of a support system according to the invention; and
- Figure 4 is a sectioned schematic view with parts removed for sake of clarity of a portion of a roof of a vehicle as the one figure 1.

### DETAILED DESCRIPTION OF THE INVENTION

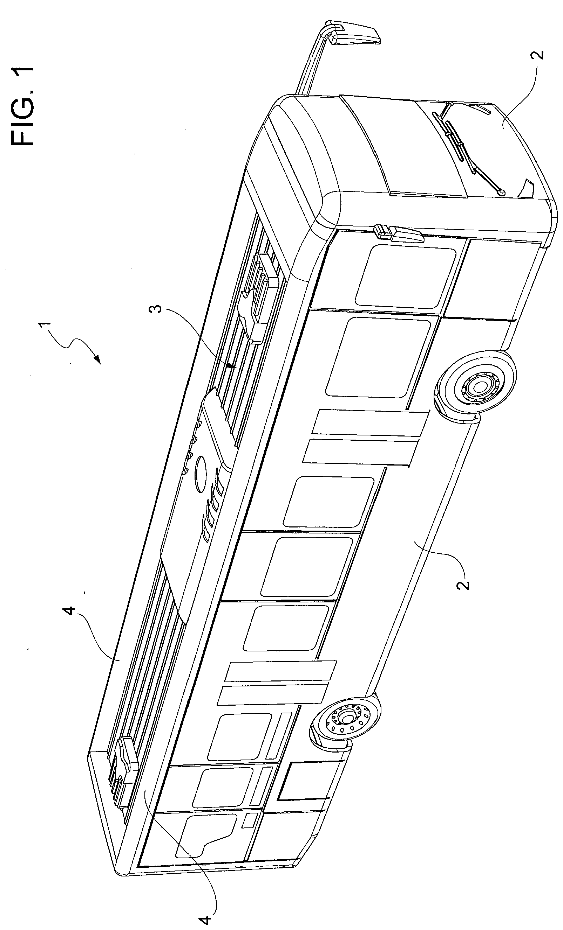

Figure 1 discloses a vehicle 1 for common transport of passengers such as a public transport vehicle, as exemplarily shown a bus.

Vehicle 1 comprises a plurality of walls 2 and a roof 3 that are connected together to limit an inner space for housing the passengers.

The vehicle 1 moreover comprises an acroter 4, whose shape is disclosed below, configured to delimit at least part of the perimeter of the roof 3, in particular as shown all the perimeter of the roof 3 to laterally separate the space over the roof from the external space.

The vehicle further comprises a plurality of different operational systems such as air conditioning systems, electric batteries or cooling systems provided with wirings and conduits W that connect these elements to the interior space of the vehicle and neither shown nor described in detail for sake of brevity.

According to the invention, the vehicle 1 is provided with at least support system 5 that is configured to both fix the acroter 4 on the roof 3 of the vehicle 1 and to support wirings and/or conduits W of the operational elements of such vehicle 1.

In particular, the vehicle comprises a plurality of support system 5 as above described placed along the perimeter of the roof 3 provided with the acroter 4 to fix this latter to the roof 3 and to support, where needed, wirings and/or conduits W of the operational elements of such vehicle 1.

In detail, the support system 5 comprises a bracket 6 configured to define at least a fixation point for the acroter 4 and configured to support the aforementioned wirings and/or conduits W.

The bracket 6 essentially comprises a support portion 7, a base portion 8 and a coupling portion 9; the base portion 8 and the coupling portion 9 are carried by the support portion 7.

The support portion 7 is configured to be fixed to the roof 3 via the base portion 8 and is configured to allow fixation of the coupling portion 9. Advantageously, the support, base and coupling portions 7, 8, 9 are realized in metallic material.

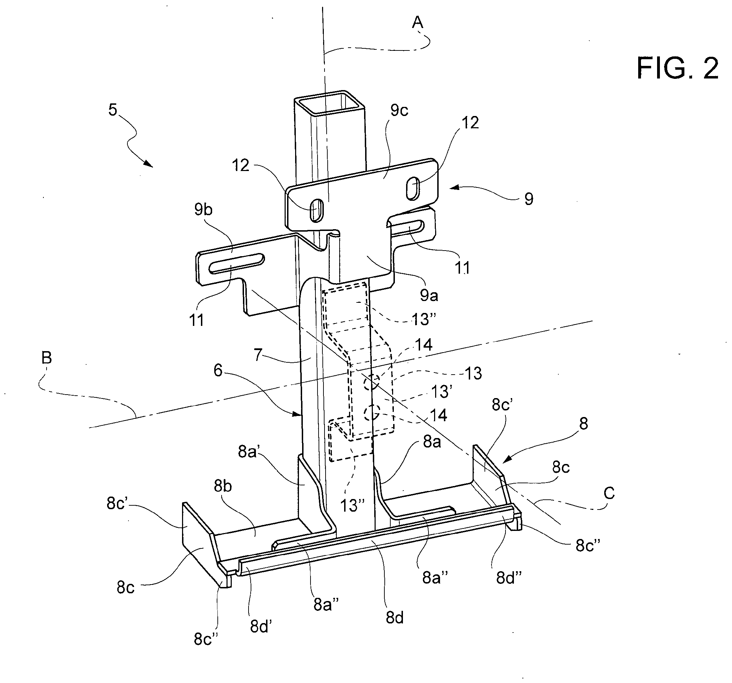

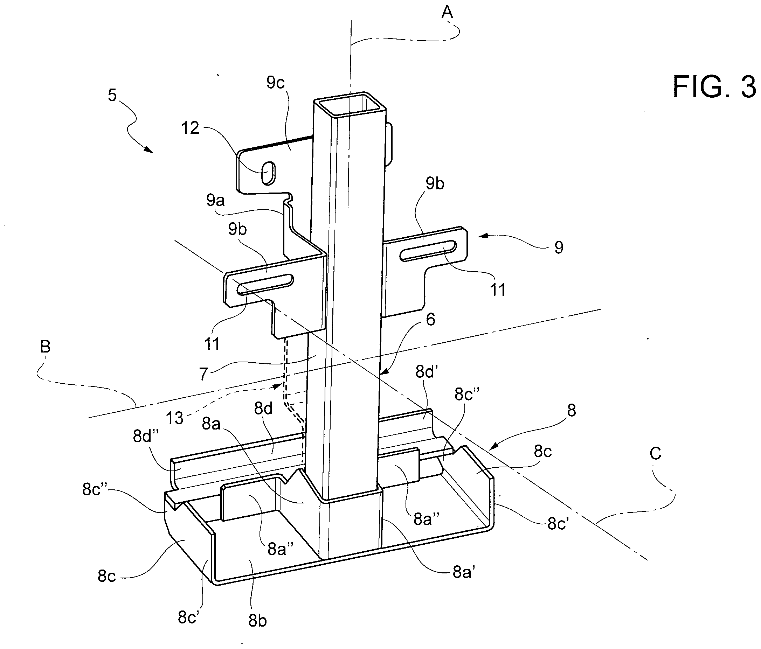

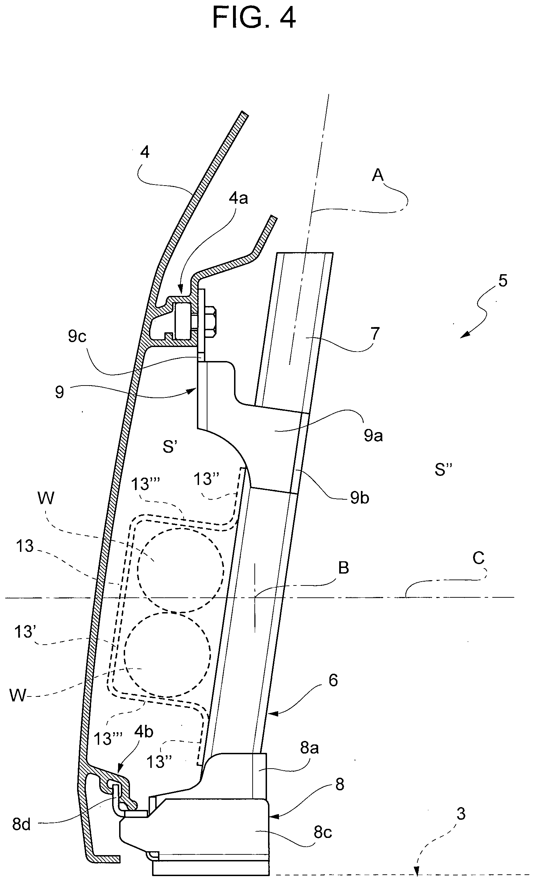

As better shown in figures 2, 3 and 4, the support portion 7 comprises a profiled element, preferably a squared cross-section tube, extending along a proper longitudinal axis A. As shown in figure 4, such longitudinal axis A, in use, extends along vertical axis of the vehicle, in particular inclined with respect to this latter.

The base portion 8 and the coupling portion 8, 9 are carried by the support portion 7 distance along axis A and positioned along this latter according to the need of the vehicle. In particular, the base portion 8 is positioned at one extremity of the support portion 7 while the coupling portion 9 is placed distanced with respect to this latter according to the need of the vehicle and, in the extreme case, at the opposite extremity along axis A of the support portion 7.

The base portion 8 and the coupling portion 9 are preferably realized via bent metal sheets having a geometry as described below.

The base portion 8 comprises an attachment portion 8a configured to define a shape suitable for being complementary to the external shape of the support portion 7.

The base portion 8 further comprises a base plate 8b extending from one edge along axis A of the attachment portion 8a and being shaped as a plate substantially rectangular plate extending along a proper longitudinal axis B that is transversal to longitudinal axis A of support portion 7. The base plate 8b can be fixed to the roof, e.g. by welding or via any suitable fixation means such as threaded means.

In the shown embodiment, the attachment portion 8a comprises a main portion 8a' having a squared C-shape in order to surround three faces of the support portion 7 and a pair of flanges 8a" extending transversally, i.e. parallel to axis B, starting from free edges of the of the main portion 8a'.

The base portion 8 further comprises a pair of side plates 8c extending in a plane delimited by axis B and a transversal axis C, transversal to both axis A and B.

The side plates 8c extends from terminal edges along axis B of the base plate 8b and preferably each comprises a main portion 8c' having a substantial trapezoidal shape and an appendix 8c'' extending from the main portion along one side along axis C, in particular on the same side of the flanges 8a'' of the attachment portion 8a. The appendix 8c'' has an extension along axis A lower with main portion 8c'.

The base portion 8 further comprises a seat portion 8d faced to the flanges 8a'' of the attachment portion 8a and supported by the appendixes 8c".

The seat portion 8d essentially comprises a support plate 8d' extending parallel to the base plate 8b, preferably above, and a cantilevered portion 8d" extending on the external edge of the support plate 8d' along the axis A, in particular joint in a bend manner to the support plate 8d'.

The coupling portion 9 comprises an attachment portion 9a configured to define a shape suitable for being complementary to at least part of the external shape of the support portion 7.

In the shown embodiment, the attachment portion 9a has a squared C-shape in order to surround three faces of the support portion 7. In particular, two sides of the attachment portion 9a cooperates at contact with the support portion and another faces, distanced along axis C direction, the face left free by the attachment portion 8a of the base portion 8.

The coupling portion 9 further comprises a pair of side plates 9b extending in a plane delimited by axis A and B and extends from terminal edges along axis B of the attachment portion 8a, i.e. by the sides cooperating at contact with the support portion 7.

The coupling portion 9 further comprise a flange portion 9c extending from an upper edge of the attachment portion 9a along axis A, i.e. opposite from the base portion 8, and therefore extending upwardly with respect to the side plates 9b. The flange portion 9c has substantially a rectangular shape and extends in a plane defined by axis A and B. Preferably flange portion 9c defines at least one opening 12, in detail, a pair of openings 12.

As shown better in figure 4, the acroter 4 is fixedly carried by the bracket 6 via base portion 8 and the coupling portion 9.

In detail, the acroter 4 is provided with an upper and a lower fixation portions 4a, 4b, namely one above the over along vertical axis of the vehicle/along axis A of the support portion 7, configured to cooperate with the flanged portion 9c of the coupling portion and the seat portion 8d of the base portion 8.

In greater detail, the upper fixation portion 4a defines a seat for allowing fixation via fixing means, for instance threadedmeans, to the flanged portion 9c of the coupling portion. The lower fixation portion 4b is in the shown embodiment, suitable for cooperating by contact with cantilevered portion 8d" of the seat portion 8d.

When coupled to the bracket 6, the acroter 4 delimit a space S' separated with respect to the remaining space S' delimited laterally with respect to the environment and lower by roof 3.

Space S' is delimited along axis A by base portion 8 and coupling portion 9 that are, as above described, spaced along axis A.

In the space S', different wirings and/or conduits W can be mounted and fixedly secured to the support portion 7 via connection means 13.

Connection means 13 may be of any suitable typology, such as strips, strings, cables or brackets according to the structural need and typology of wiring/conduit. Indeed, connection means 13 for high voltage wires should be realized in non-conductive material while connection means 13 for water conduits can be realized in any material but with sufficient strength to support their weight.

Connection means 13 may be secured via openings 12 realized in side plates of the coupling portions 9 or, as in the shown embodiment, the connection means 13 comprises a bracket 13, preferably omega-shaped therefore comprising a pair of feet 13", a central portion 13' connected to feet 13" via a connection wall 13". The bracket 13 allows the housing and the fixation via feet 13" (e.g. via threaded means or by welding) to the support portion 7.

In detail, the central portion 13' may be provided with openings 14 to further connect other elements or to tight the wires/conduits thereon.The operation of the embodiment of the invention as described above is the following.

The bracket 6 can be mounted and fixed according to the peculiar dimensions and shapes of the acroter 4 simply assembling the base portion 8 and the coupling portion 9 to the structural portion 7. Once assembled, either by welding or by screws, it is possible to fix, via connection means 13 the wires/conduits W in a space S' that will be covered by the coupling of the acroter 4.

In particular acroter 4 can be mounted first by coupling by contact the lower fixation portion 4b and then securing by fixation means the upper fixation portion 4a.

In view of the foregoing, the advantages of a support system and a vehicle according to the invention are apparent.

Thanks to the proposed support system it is possible to manage the fixation of the acroter and of the functional wires/conduits on the roof of a vehicle via a single component.

Furthermore, such single component is designed in a modular way that allows the fixation of different geometries of acroter 4 and connection means 13 for different typologies of wires/conduits.

In particular, when fixed to the bracket 6, the wires/conduits W are secured in a space S' that is delimited and covered by the acroter 4, thereby protecting, at least partially, to weather conditions, to damages due to impacts and for contact during washing of the vehicle,e.g due to washing brush.

It is clear that modifications can be made to the described support system and vehicle which do not extend beyond the scope of protection defined by the claims.

For example, the proposed shape of the bracket and in particular of its component may vary within the limit of the appended set of claims.

Clearly, a variable number of support systems may be provided to support the acroter 4 to the vehicle roof 3.

## Claims

1. Support system (5) for a vehicle (1) comprising a roof (3) and an acroter (4) delimiting at least part of the perimeter of said roof (3) and at least an operational system provided with wires and/or conduits (W), said support system (5) being configured to fix said acroter (4) to said roof (4) and to support said wires and/or conduits (W).

2. Support system according to claim 1, wherein said support system (5) comprises a bracket (6) defining at least a fixing point for said acroter (4) and configured to support said wires and/or conduits (W).

3. Support system according to claim 2, wherein said bracket (6) comprises a support portion (7), a base portion (8) and a coupling portion (9), said base portion (8) and said coupling portions (9) being carried by said support portion (7), said base portion (8) being configured to connect said support portion (7) to said roof (3) and said coupling portion (9) being configured to connect said acroter (4) to said support portion (7).

4. Support system according to claim 3, wherein said base portion (8) is carried by said support portion (7) at an extremity along a longitudinal axis (A) of said support portion (7), said coupling portion (9) being spaced along said axis (A) with respect to said base portion (8).

5. Support system according to claim 3 or 4, wherein said support portion (7) comprises a profiled element.

6. Support system according to any of claims 3 to 5, wherein said base portion (8) comprises an attachment portion (8a) having a shape complementary to the support portion (7) to cooperate at contact thereon and a base plate (8b) extending from said attachment portion (8a) and configured to be fixed to said roof (3).

7. Support system according to claim 6, wherein said base portion (8) further comprises a pair of side plates (8c) carried at terminal portions along a transversal axis (B) with respect to said longitudinal axis (A) by said base plate (8b).

8. Support system according to claim 7, wherein said base portion (8) further comprises a pair of seat portion (8d) supported between said side plates (8c) and faced to said support portion (7).

9. Support system according to any of claims 3 to 8, wherein said coupling portion (9) comprises an attachment portion (9a) having a shape at least in part complementary to the support portion (7) to cooperate at contact thereon and a flange portion (9c) extending from an upper edge of said attachment portion (9a), said flange portion (9c) defining at least an opening (12).

10. Support system according to claim 9, further comprising a pair of side plates (9b) extending from the attachment portion (9b) opposite with respect to said flange portion (9c) along an axis (C) transversal to said axis (A).

11. Support system according to claim 10, wherein said side plates (9b) defines each at least one opening (11).

12. Support system according to any of claims 3 to 11, wherein said acroter (4) defines an upper and a lower connection fixation portions (4a, 4b) configured to cooperate with respectively said coupling portion (9) and said base portion (8).

13. Support system according to claim 12 when depending on claims 8 and 9, wherein said upper fixation portion (4a) cooperates with said flange portion (9c) and wherein said lower portion (4b) cooperates with said seat portion (8d).

14. Support system according to any of claims from 3 to 13, further comprising connection means (13) configured to secure said wirings/conduits (W) to said bracket (6).

15. Support system according to any of claims 3 to 14, wherein said support portion (7), said base portion (8) and said coupling portion (9) are realized in metallic material.

16. Support system according to any of claims 3 to 15, wherein said support portion (7), said base portion (8) and said coupling portion (9) are realized via bent metal sheets.

17. Vehicle (1) comprising a roof (3) and an acroter (4) delimiting at least part of the perimeter of said roof (3) and at least an operational system provided with wires and/or conduits (W), said vehicle (1) comprising a support system (5) for connecting said acroter (4) to said roof (3) and for supporting said wires and/or conduits (W) according to any of the preceding claims.
